Europäisches Patentamt

European Patent Office

Office Européen des brevets

(19)

(11) Veröffentlichungsnummer: **0 242 434 B1**

# (12) EUROPÄISCHE PATENTSCHRIFT

(45) Veröffentlichungstag der Patentschrift:
02.01.91 Patentblatt 91/01

(51) Int. Cl.⁵: **B60P 3/04**, B62D 29/04, B62D 63/06

(21) Anmeldenummer: 86114007.7

(22) Anmeldetag: 09.10.86

(54) Verfahren zur Herstellung eines geschlossenen Anhänger-Kastenaufbaues sowie Kraftfahrzeug-Anhänger mit einem solchen Kastenaufbau, insbesondere für den Tiertransport.

(30) Priorität: 23.04.86 DE 3613620

(43) Veröffentlichungstag der Anmeldung:
28.10.87 Patentblatt 87/44

(45) Bekanntmachung des Hinweises auf die
Patenterteilung:
02.01.91 Patentblatt 91/01

(84) Benannte Vertragsstaaten:
AT BE DE FR GB IT LU NL

(56) Entgegenhaltungen:
DE-U- 8 106 717
DE-U- 8 127 987
FR-A- 1 227 925
FR-A- 1 347 527
US-A- 1 953 515

(73) Patentinhaber: Westfalia-Werke Franz Knöbel
& Söhne KG
Am Sandberg 45
D-4840 Rheda-Wiedenbrück (DE)

(72) Erfinder: Braun, Dieter, Dipl.-Ing.
Robert-Schumann-Strasse 6
D-4840 Rheda-Wiedenbrück (DE)
Erfinder: Koglin, Klaus
Flurstrasse 16
D-4410 Warendorf (DE)

(74) Vertreter: Müller, Gerd et al
Patentanwälte
HEMMERICH-MÜLLER-GROSSE-POLLMEIER-MEY
Hammerstrasse 2
D-5900 Siegen 1 (DE)

## Beschreibung

Die Erfindung betrifft ein Verfahren zur Herstellung eines geschlossenen Anhänger-Kastenaufbaues, insbesondere für den Tiertransport. Gegenstand der Erfindung ist ferner ein Kraftfahrzeuganhänger, insbesondere für den Tiertransport, mit einem einachsigen oder tandemachsigen Fahrgestell, einer auf diesem montierten Bodenplatte als Ladeplattform und einem geschlossenen Kastenaufbau, der aus zwei Längswänden, einer Stirnwand und einer Decke besteht, und dessen Rückwand von mindestens einer um eine horizontale Achse verlagerbaren Klappe gebildet ist.

Kraftfahrzeuganhänger der genannten Gattung, insbesondere für den Tiertransport sind bereits bekannt, wie bspw. aus dem DE-U-81 06 717 und dem DE-U-81 27 987 hervorgeht.

Diesen bekannten Kraftfahrzeug-Anhängern haftet vor allem der Nachteil an, daß ihr geschlossener Kastenaufbau aus einer relativ großen Anzahl verschiedener Teile zusammengesetzt werden muß, nachdem diese in den jeweils erforderlichen Abmessungen vorgefertigt worden sind. Jedes dieser Teile muß dabei so ausgelegt werden, daß es sich mit genügend großer Stabilität mit den ihm benachbarten Teilen zur Bildung eines formstabilen Kastenaufbaues verbinden läßt.

Es liegt auf der Hand, daß alle zu einem Kastenaufbau gehörenden Einzelteile mit hoher Fertigungsgenauigkeit vorbereitet werden müssen, damit ihr einwandfreier Zusammenbau ermöglicht wird.

Eine genügend hohe Stabilität des fertigen Kastenaufbaues macht es dabei aber notwendig, zumindest den unteren Teil der Längswände und gegebenenfalls auch der Stirnwand außenseitig mit besonderen Schrägstreben abzustützen, die zumindest über quer verlaufende Hilfstraversen mit den Fahrwerks-Längsträgern verbunden sind. Dabei ragen diese Schrägstützen zumindest in ihrem unteren Bereich jeweils um ein beträchtliches Maß über die Außenflächen des Kastenaufbaues hinaus, wobei dieses Maß wenigstens nahezu gleich der Breite der Radlaufkästen bzw. der Kotflügel des Fahrgestells ausfallen kann. Es ergibt sich hierdurch zumindest eine aerodynamisch ungünstige Außenkontur für den geschlossenen Kastenaufbau.

Ziel der Erfindung ist es, die den bekannten Kraftfahrzeuganhängern mit geschlossenem Kastenaufbau, wie sie insbesondere für den Tiertransport verwendet werden, anhaftenden Unzulänglichkeiten auszuräumen.

Der Erfindung ist daher die Aufgabe gestellt, ein Verfahren zur Herstellung eines geschlossenen Anhänger-Kastenaufbaues für Kraftfahrzeuganhänger anzugeben, bei dem nur wenige verschiedene Bauteile benötigt werden, die sich mit einem Minimum von Fügearbeit miteinander und auch mit dem Fahrgestell verbinden lassen, trotzdem aber eine sowohl außen- als auch innenseitig glattflächige Kontur sowie zugleich eine hohe Formstabilität des Kastenaufbaues gewährleisten. Wichtig ist dabei ferner, daß eine wetterdichte Ausbildung des Kastenaufbaues erreicht wird und ein baulich einfach gestalteter Kraftfahrzeuganhänger der gattungsmäßig näher spezifizierten Art entsteht.

Das erfindungsgemäße Herstellungsverfahren wird nach dem Kennzeichen des Anspruchs 1 darin gesehen, daß zunächst aus Trägermaterialien und Bindemitteln zwei zu einer vertikalen Längsebene wenigstens annähernd symmetrische Halbschalen mit je einer Längswand, einer Stirnwandhälfte und einer Deckenhälfte geformt und ausgehärtet werden, daß dann die die beiden Halbschalen tragenden Formhälften mit den Randkanten ihrer Stirnwand-Formabschnitte sowie mit den Randkanten ihrer Decken-Formabschnitte stumpf gegeneinandergefahren sowie anschließend die Randkanten ihrer Stirnwandhälften und die Randkanten ihrer Deckenhälften durch Überlappungslaminierung aus weiteren Trägermaterialien und Bindemaitteln fest miteinander verbunden werden.

Nach Anspruch 2 hat es sich dabei als besondere vorteilhaft bewährt, wenn jede Halbschale aus einer äußeren Laminatschicht, aus einer inneren Laminatschicht sowie - zweckmäßig teilweise - aus mindstens einer von diesen eingeschlossenen und mit ihnen verbundenen Zwischen-Laminatschicht und/oder Versteifungsschicht zusammengefügt wird, und daß dabei vorzugsweise zunächst die äußere Laminatschicht gebildet, unmittelbar darauf die Zwischen-Laminatschicht und/oder die Versteifungsschicht aufgebracht und dann auf dieser wiederum unmittelbar die innere Laminatschicht aufgebaut wird.

Nach Anspruch 3 wird erfindungsgemäß in den unteren Längsrandbereich jeder Halbschale wenigstens entlang der Längswand ein Metallprofilträger eingebettet, und dabei wenigstens teilweise einerseits von der äußeren Laminatschicht und andererseits von der inneren Laminatschicht abgedeckt, wobei vorzugsweise wenigstens die innere Laminatschicht durch Öffnungen bzw. Ausnehmungen, bspw. Längsschlitze, im Metallprofilträger hindurch mit der benachbarten Zwischen-Laminatschicht und/oder Versteifungsschicht fest verbunden, insbesondere verklebt, wird. Für die Formgebung jeder Halbschale werden zweckmäßigerweise Formen benutzt, auf die sich die Trägermaterialien und die zu deren Durchtränkung und Verbindung benutzten Bindemittel schichtweise bis zur Erzielung der jeweils gewünschten Gesamt-Schichtdicke auftragen lassen. Diese Formen für die Halbschalen sind dabei muldenförmig -als sogenannte Negativformen - ausgeführt.

Glatte Außenflächen an jeder fertigen Halbschale lassen sich auf einfachste Art und Weise dadurch erzielen, daß die zu ihrer Bildung vorgesehenen Innenflächen der Negativformen hochglanzpoliert und/oder mit einer Antihaftbeschichtung versehen werden.

Die die Farbgebung für den Anhänger-Kastenaufbau bestimmende Lackschicht kann in diesem Falle unmittelbar auf die Innenfläche der Negativform aufgespritzt werden, wobei sie sich mit den anschließend aufgebrachten Laminatschichten verbindet.

Beim Entfernen der Halbschalen aus den Formhälften befindet sich dann die Lackschicht auf der Außenfläche der äußeren Laminatschicht und ist damit unlösbar und feste verbunden.

Das erfindungsgemäße Herstellungsverfahren zeichnet sich nach Anspruch 4 weiterhin dadurch aus, daß wenigstens an oder nahe der hinteren Querkanten der beiden Halbschalen mit der äußeren Laminatschicht über den größten Teil der Höhe der Längswand hinweg eine Seitenwandstütze fest verbunden, insbesondere verklebt wird, während mit deren innerer Laminatschicht, über den oberen Bereich der Längswand sowie entlang der Decke verlaufend, eine Schaumkernverstärkung, vorzugsweise durch Verklebung, in feste Verbindung gebracht wird, und dabei zweckmäßig mit der inneren Laminatschicht beide Halbschalen mindestens eine entlang der Längswand verlaufende, horizontale Schaumkernverstärkung fest verbunden, vornehmlich verklebt wird.

In Weiterbildung des Herstellungsverfahrens nach der Erfindung ist nach Anspruch 5 vorgesehen, daß die Metallprofilträger der beiden Halbschalen durch eine Fahrwerkstraverse, mindestens eine Hilfstraverse sowie einen hinteren Querträger zu einem Rahmenkörper miteinander verbunden werden, und dabei vorzugsweise eine Bodenplatte mit ihren Längsrändern in die beiden Metallprofilträger formschlüssig eingeschoben und darin wenigstens durch den hinteren Querträger lagenfixiert wird, und darüber hinaus zweckmäßigerweise die Bodenplatte durch die Metallprofilträger mit der Fahrwerkstraverse, der Hilfstraverse, dem hinteren Querträger sowie mit den Fahrwerks-Längsträgern lösbar verbunden wird.

Ein Kraftfahrzeuganhänger nach der Erfindung zeichnet sich entsprechend dem Kennzeichnungsteil des Anspruchs 6 dadurch aus, daß der Kastenaufbau aus zwei zu seiner vertikalen Längsebene wenigstens annähernd symmetrischen Halbschalen besteht, deren jede einstückig eine Längswand, eine Stirnwandhälfte und eine Deckenhälfte umfaßt, daß diese Halbschalen mit den Randkanten ihrer Stirnwandhälften sowie mit den Randkanten ihrer Deckenhälften auf Abstand gegeneinandergesetzt sind, und daß die einander zugewendeten Randkantenbereiche durch Überlappungs-Zwischenstücke fest miteinander verbunden sind.

Nach Anspruch 7 sind erfindungsgemäß die Halbschalen jeweils als Laminat-Formteile aus Trägermaterialien und Bindemitteln ausgeführt sowie durch ebenfalls laminierte Überlappungsstücke aus solchen Trägermaterialien und Bindemitteln miteinander verbunden.

Es hat sich dabei bewährt, wenn gemäß Anspruch 8 die Trägermaterialien aus Gewebe- und/oder Vliesmatten, z.B. Glas- oder Mineralfasermatten, und formsteifen Schichtkörpern, bspw. Holzplatten, Furnierstreifen, Kunststoffplatten oder dergleichen, bestehen, während die Bindemittel von härtbaren Kunststoffen und/oder Klebern gebildet sind.

Eine wichtige bauliche Weiterbildung für einen erfindungsgemäßen Kraftfahrzeuganhänger wird nach Anspruch 9 auch darin gesehen, daß jede Halbschale aus einer äußeren Laminatschicht und einer inneren Laminatschicht sowie durch diese miteinander verbundene, formhaltende Zwischen-Laminatschichten und/oder Versteifungsschichten, vorzugsweise Holzplatten, Furnierschichten, Schichtkörpertapfeln oder dergleichen, gebildet ist.

Anspruch 10 sieht vor, daß zwischen die unteren Längsrandbereiche der äußeren Laminatschicht und der inneren Laminatschicht mindestens entlang der Längswand ein Metallprofilträger eingesetzt ist, der einen aufrechten Profilflansch und ein sich daran einstückig anschließendes, mit seiner Längsöffnung nach einwärts gerichtetes Rinnenprofil umfaßt, daß dabei vorzugsweise der aufrechte Profilflansch des Metallprofilträgers zwischen der inneren Laminatschicht sowie der dieser benachbarten Zwischen-Laminatschicht und/oder Versteifungsschicht eingeschlossen ist und in seiner Längsrichtung verteilt angeordnete Durchbrüche. z.B. Längsschlitze, aufweist, durch die hindurch die innere Laminatschicht mit der benachbarten Zwischen- und/oder Versteifungsschicht in unmittelbarer Verbindung steht, bspw. verklebt ist, und daß ebenfalls vorzugsweise der Stegabschnitt am Rinnenprofil des Metallprofilträgers von der äußeren Laminatschicht überlappt ist und dabei über seine Länge verteilt angeordnete Durchbrüche, z.B. Längsschlitze, aufweist, in die die äußere Laminatschicht bereichsweise zur Herstellung einer Halteverbindung hineingeformt ist.

Ein anderes Ausgestaltungsmerkmal der Erfindung besteht nach Anspruch 11 darin, daß die die Ladeplattform bildende Bodenplatte mit ihren Längsrändern in die Rinnenüprofile der beiden mit ihren Längsöffnungen einander zugewendeten Metallprofilträger eingeschoben und darin mittels deren Flansche durchdringenden Schrauben lösbar fixiert ist, wobei zweckmäßig die Eingriffsgewinde für die Schrauben aus Gewinde- bzw. Mutterstücken bestehen, die fest auf der Oberseite des oberen Flansches der Rinnenprofile angeordnet, z.B. angeschweißt, und in randseitigen Ausschsnittbereichen der Zwischen-Laminatschicht und/oder Versteifungsschicht aufgenommen sind, und vorzugsweise die Schrauben durch randseitig in der Bodenplatte vorgesehene, vorzugsweise ausgebuchste Löcher geführt sind, sowie vorteilhaft die Bodenplatte durch die Metallprofilträger mit der Fahrwerkstraverse, der Hilfstraverse, dem hinteren Querträger sowie mit den Fahrwerks-Längsträgern lösbar verbunden ist.

Der die große Dicke aufweisende Höhenbereich der beiden Längswände ist nach Anspruch 12 wenigstens nahe der hinteren Querkanten durch außen auflaminierte Seitenwandstützen stabilisiert, während der obere Bereich dieser Längswände sowie die Decke mit einer innenseitig auflaminierten Schaumkernverstärkung versehen ist, und zweckmäßig darüber hinaus mit der inneren Laminatschicht beide Halbschalen midnestens eine entlang der Längswand verlaufende, horizontale Schaumkernverstärkung fest verbunden, vornehmlich verklebt ist.

Nach Anspruch 13 können die Metallprofilträger der beiden Halbschalen durch eine Fahrwerkstraverse, mindestens eine Hilfstraverse sowie einen hinteren Querträger zu einem Rahmenkörper miteinander verbunden werden, wobei zweckmäßig ds hintere Ende der Bodenplatte durch einen die hinteren Enden der beiden Metallprofilträger verbindenden Querträger geschützt und abgestützt ist und vorteilafterweise noch die Bodenplatte mit ihren Längsrändern in die beiden Metallprofilträger formschlüssig eingeschoben und darin wenigstens durch den hinteren Querträger lagenfixiert ist.

Die Erfindung wird nachstehend anhand von Zeichnungen ausführlich erläutert. Es zeigen

Figur 1 in Längsansicht von links einen Kraftfahrzeuganhänger mit geschlossenem Kastenaufbau, insbesondere für den Pferdetransport,
Figur 2 den Kraftfahrzeuganhänger nach Fig. 1, jedoch in Längsansicht von rechts,
Figur 3 den Kraftfahrzeuganhänger nach Fig. 1 in Stirnansicht,
Figur 4 den Kraftfahrzeuganhänger in Rückansicht,
Figur 5 den Kraftfahrzeuganhänger in der Draufsicht,
Figur 6 in größerem Maßstab einen Schnitt entlang der Linie VI-VI in Fig. 5,
Figur 7 einen Schnitt entlang der Linie VII-VII in Fig. 5,
Figur 8 in größerem Maßstab einen Schnitt entlang der Linie VIII-VIII in den Fig. 1 und 3,
Figur 9 in größerem Maßstab einen Schnitt entlang der Linie IX-IX in den Fig. 1 und 4,
Figur 10 in einer von Fig. 3 abgeleiteten Stirnansicht zwei zueinander spiegelbildliche Halbschalen zur Bildung des Kastenaufbaues für den Kraftfahrzeuganhänger,
Figur 11 in einer von Fig. 5 abgeleiteten Draufsicht die beiden Halbschalen zur Bildung des Kastenaufbaues für den Kraftfahrzeuganhänger,
Figur 12 die Ausformung der äußeren Laminatschicht für eine der Halbschalen des Kastenaufbaues nach den Fig. 10 und 11.

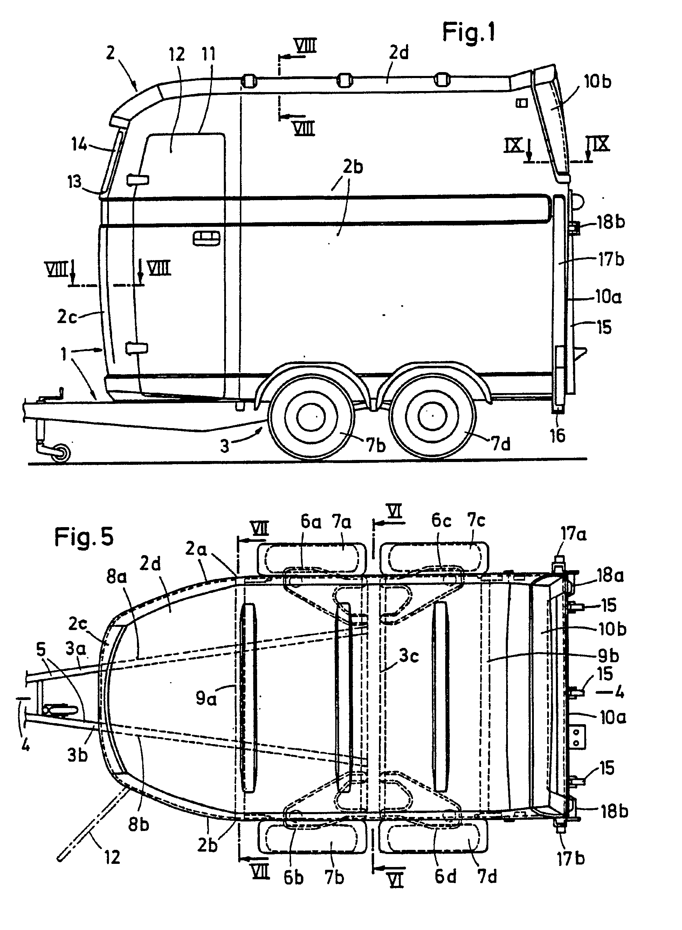

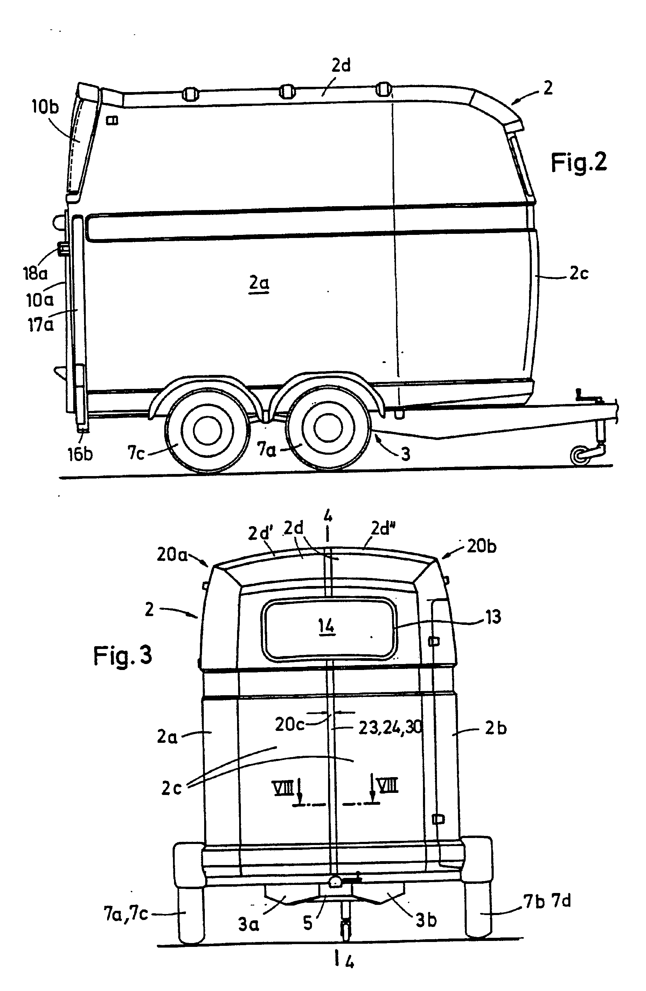

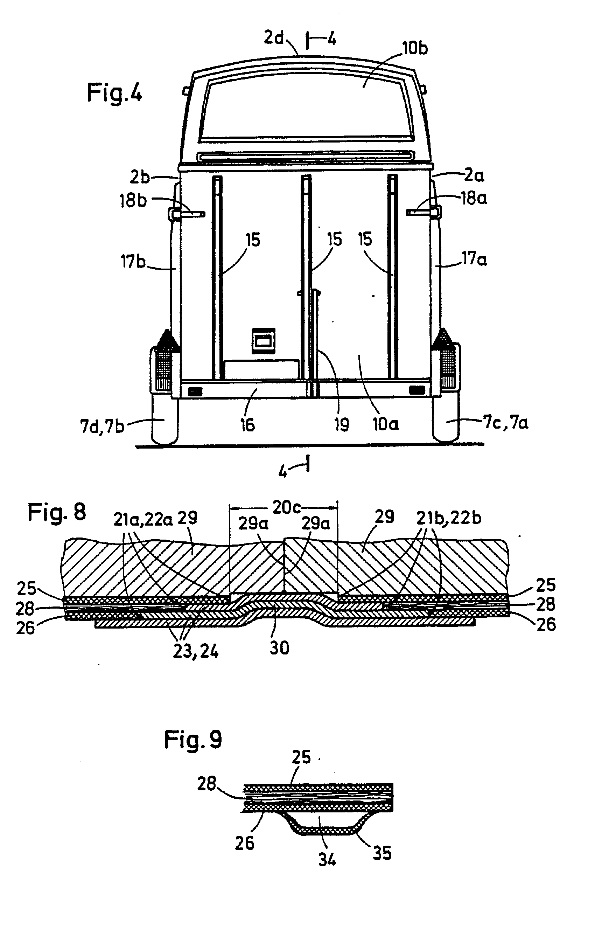

In den Fig. 1 bis 5 der Zeichnung ist jeweils ein Kraftfahrzeuganhänger 1 mit geschlossenem Kastenaufbau 2 dargestellt, der für den Tiertransport, und zwar insbesondere den Pferdetransport, zum Einsatz gelangt. Das Fahrgestell 3 des Kraftfahrzeuganhängers 1 hat zwei Längsträger 3a und 3b, die symmetrisch zur Längsmittelebene 4-4 angeordnet sowie von hinten nach vorne zur Bildung der Deichsel 5 dreieckförmig zusammengeführt sind. An ihrem hinteren Ende sind dabei die beiden Längsträger 3a und 3b fest mit einem Querträger 3c verbunden, wobei an dessen beiden Enden jeweils zwei Längslenker 6a, 6c bzw. 6b, 6d aufgehängt sind, die wiederum Lagerträger für Laufradpaare 7a, 7c und 7b, 7d bilden, derart, daß das Fahrgestell 3 eine sogenannte Tandemachse hat.

Auf das Fahrgestell 3 ist der Kastenaufbau 2 aufgesetzt, wobei dieser hauptsächlich auf dem Querträger 3c desselben ruht, zusätzlich aber noch in seinem vorderen Bereich jeweils bei 8a und 8b mit den beiden Längsträgern 3a und 3b verbunden ist.

Mit Abstand vor dem Querträger 3c wird der geschlossene Kastenaufbau 2 noch von einer Hilfstraverse 9a unterfangen, während auch mit entsprechendem Abstand hinter dem Querträger 3c eine solche Hilfstraverse 9d angeordnet ist.

Der geschlossene Kastenaufbau 2 hat zwei Längswände 2a und 2b, eine Stirnwand 2c und eine Decke 2d. Hinten ist der Kastenaufbau 2 durch eine untere Klappe 10a und eine obere Klappe 10b verschließbar, wobei die untere Klappe 10a so bemessen ist, daß sie etwa zwei Drittel der Höhe des Kastenaufbaues 2 abgdeckt, während die obere Klappe 10b nur das übrige Drittel der Höhe des Kastenaufbaues 2 verschließen kann. Die untere Klappe 10a kann dabei als Rampe mit ihrem freien Ende bis auf den Boden herabgelassen werden.

In die linke Längswand 2b des Kastenaufbaues 2 ist mit geringem Abstand von der Stirnwand 2c ein Türausschnitt 11 eingearbeitet, der durch ein Türblatt 12 wahlweise verschlossen oder freigegeben werden kann. Im oberen Drittel der Stirnwand 2c ist ein Fensterausschnitt 13 vorhanden, der eine Sichtscheibe 14 enthält.

Zur Bildung der Rampe ist die untere Rückwand-Klappe 10a außenseitig durch mehrere, bspw. drei Längsholme 15 stabilisiert und über diese an einem hinteren Querträger 16 angelenkt.

Mit den beiden Enden dieses Querträgers 16 steht jeweils wiederum das untere Ende einer aufrechten Seitenwandstütze 17a bzw. 17b in fester Verbindung. Jede dieser Seitenwandstützen 17a und 17b erstreckt sich dabei am hinteren Ende des Kastenaufbaues 2 über die Höhe der unteren beiden Drittel der Längswand 2a bzw. 2b. Jede Seitenwandstütze 17a bzw. 17b ist dabei auf ihrer ganzen Länge mit der ihr benachbarten Längswand 2a bzw. 2b fest verbunden und dient zur Stabilisierung derselben, insbesondere im Zusammenwirken mit der in Schließlage befindlichen Rückwandklappe 10a, die dann über Hebelverschlüsse 18a und 18b mit den Seitenwandstützen 17a und 17b in Verbindung gehalten wird.

Eine Klapphilfe 19 ist einerseits am hinteren Querträger 16 und andererseits am mittleren Längsholm 15 der unteren Rückwandklappe 10a angelenkt und so ausgebildet, daß sie sowohl die Öffnungs- als auch die Schließbewegung der Rückwandklappe 10a unterstützen kann.

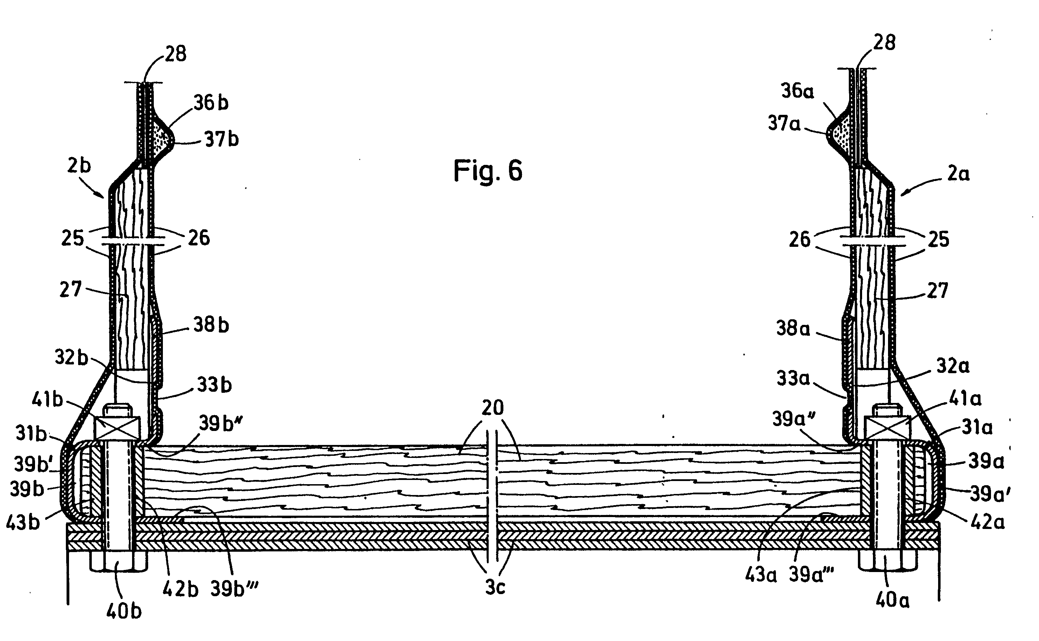

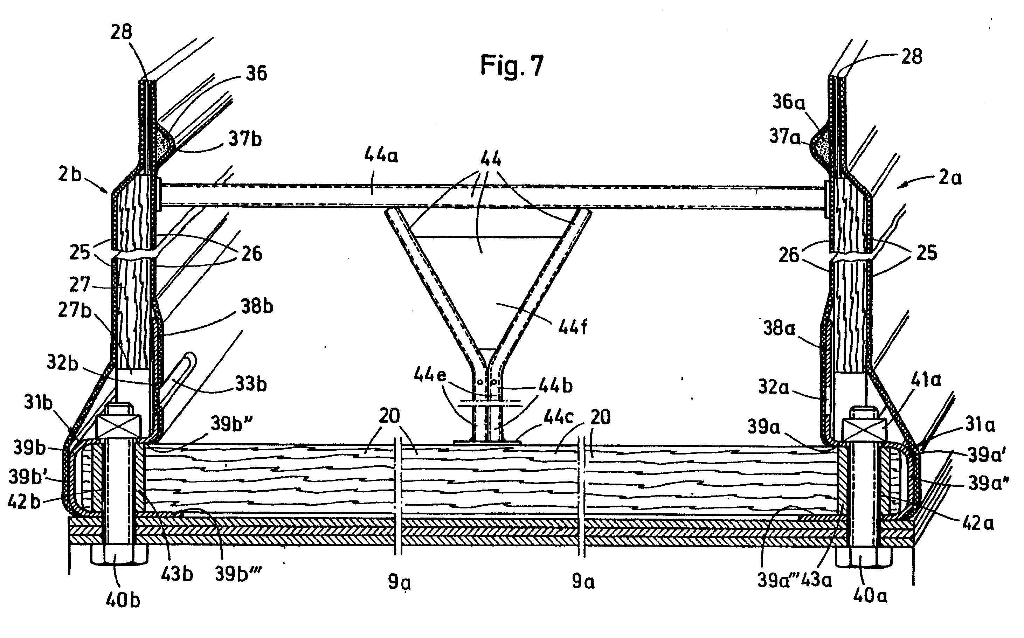

Natürlich weist der Kraftfahrzeuganhänger 1 zwischen seinem Kastenaufbau 2 und dem Fahrgestell auch eine als Ladeplattform eingebaute Bodenplatte 20 auf, die jeweils in den Figuren 6 und 7 zu sehen ist. Diese Bodenplatte 20 ruht dabei gemäß Fig. 6 über ihre ganze Breite auf der Quertraverse 3c, welche zur Lagerung der Längslenker 6a bis 6d für die Laufräder 7a bis 7d des Fahrwerks dient. Die Bodenplatte 20 wird jedoch weiterhin auch noch durch die Hilfstraversen 9a und 9b auf ihrer ganzen Breite unterstützt, wie dies in Fig. 7 anhand der Hilfstraverse 9a gezeigt ist.

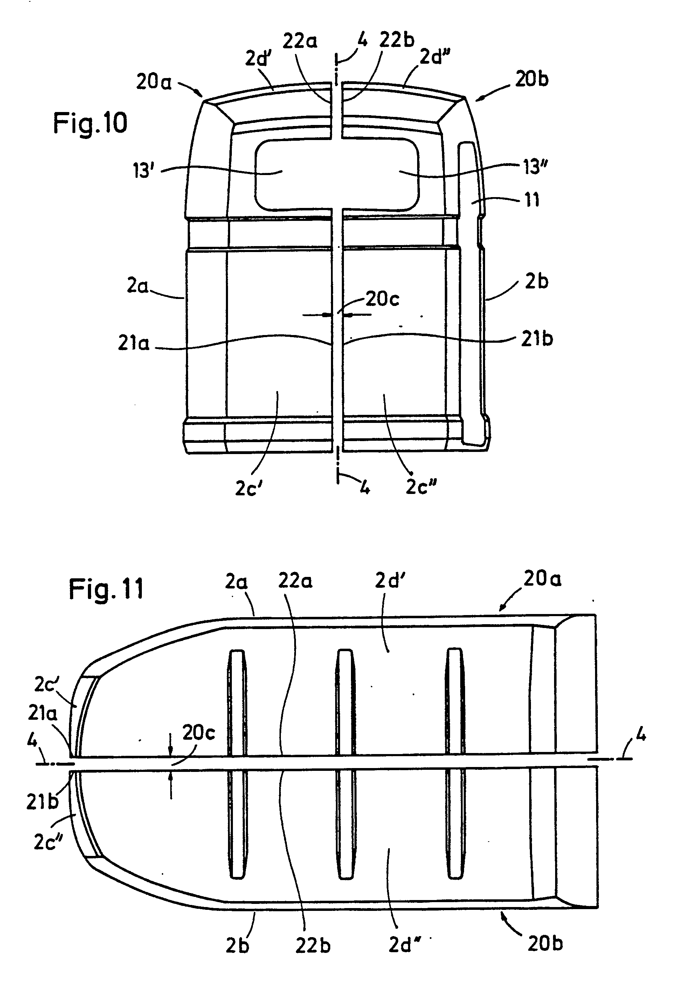

Besonders wesentlich ist bei dem Kraftfahrzeuganhänger 1 mit geschlossenem Kastenaufbau 2, daß der geschlossene Kastenaufbau 2 aus zwei zu seiner vertikalen Längsebene 4-4 wenigstens annähernd symmetrisch gestalteten Halbschalen 20a und 20b hergestellt wird, wie sie in den Fig. 10 und 11 dargestellt sind.

Jede dieser Halbschalen 20a und 20b wird dabei zunächst aus Trägermaterialien, wie bspw. Glas- und/oder Mineralfasermatten, Holzplatten und Schichtkörpertafeln, sowie Bindemitteln, wie bspw. härtbaren Kunststoffen und Klebern geformt und ausgehärtet. Die Herstellung erfolgt dabei so, daß die Halbschale 20a die Längswand 2a, eine Stirnwandhälfte 2c' und eine Deckenhälfte 2d' umfaßt, die einstückig miteinander in Verbindung stehen. Andererseits werden an der Halbschale 20b die Längswand 2b, die Stirnwandhälfte 2c" und die Deckenhälfte 2d" einstückig ausgeformt. Selbstverständlich läßt sich dabei in die Halbschale 20b im Bereich des vorderen Teils der Längswand 2b auch der Türausschnitt 11 von vornherein einarbeiten, während die Stirnwandhälften 2c' und 2c" beider Halbschalen 20a und 20 b von vornherein auch schon jeweils mit dem halben Fensterausschnitt 13' bzw. 13" versehen werden können.

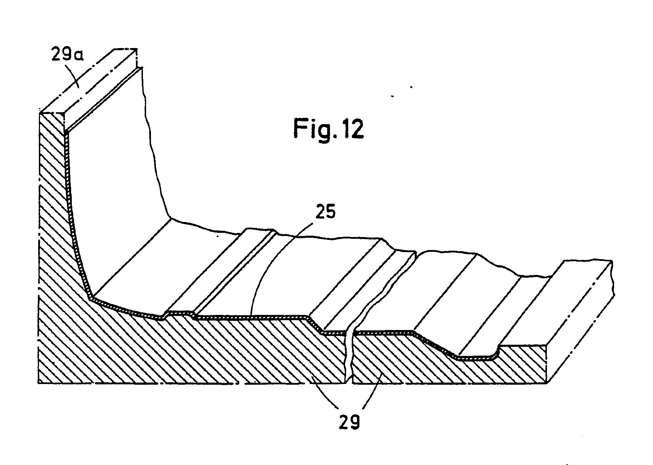

Die solchermaßen jeweils einstückig vorgefertigten Halbschalen 20a und 20b werden sodann auf der Längsmittelebene 4-4 mit den Randkanten 21a und 21b ihrer Stirnwandhälften 2c' und 2c" sowie mit den Randkanten 22a und 22b ihrer Deckenhälften 2d' und 2d" auf Abstand 20c stumpf gegeneinandergefahren, wie dies in Fig. 8 angedeutet ist. In dieser Stellung der beiden Halbschalen 20a und 20b die durch das Gegeneinanderstoßen von Randkanten 29a zweier jeweils die Halbschalen 20a und 20b tragenden Formen 29 (Fig. 12) bestimmt wird, werden diese anschließend durch Herstellung von Überlappungslaminierungen 23, 24 und 30 aus Trägermaterialien und Bindemitteln fest miteinander verbunden, wie dies ebenfalls aus der Fig. 8 entnommen werden kann. Die äußere Laminatschicht 25, die innere Laminatschicht 26 und die Zwischen-Laminatschicht 28 sind dazu an beiden Halbschalen 20a und 20b stufenförmig gegeneinander abgesetzt und werden durch die entsprechend gestuften Überlappungslaminierungen 23, 24 und 30 überbrückt.

Besonders deutlich ist den Fig. 6 und 7 zu entnehmen, daß jede der beiden Halbschalen 20a und 20b aus einer äußeren Laminatschicht 25, einer inneren Laminatschicht 26 sowie mindestens einer von diesen Laminatschichten 25 und 26 eingeschlossenen und mit ihnen verbundenen Zwischen-Laminatschicht 28 und/ oder Versteifungsschicht 27 zusammengefügt wird. Dabei kann die Versteifungsschicht 27 jeweils aus einer relativ dicken Holzplatte, insbesondere einer Schichtholzplatte, bestehen, deren Höhe etwa zwei Dritteln der Gesamthöhe der Seitenwand 2a bzw. 2b einer Halbschale 20a bzw. 20b entspricht. Die Zwischen-Laminatschicht 28, welche sich im Bereich des oberen Drittels der betreffenden Längswand 2a bzw. 2b sowie in der Deckenhälfte 2d' bzw. 2d" und auch in der Stirnwandhälfte 2c' und 2c" befindet, kann jedoch aus Glas- oder Mineralfasermatten, aber auch aus einer mehr oder weniger großen Anzahl von relativ dünnen Schichtkörpertafeln gebildet werden, wobei jede derselben für sich allein relativ leicht biegeverformbar ist. Sobald jedoch die Zwischen-Laminatschicht 28 bildenden Materialien aufeinanderlaminiert und miteinander verklebt oder auf andere Weise fest verbunden sind, ergibt sich dort zwischen der äußeren Laminatschicht 25 und der inneren Laminatschicht 26 eine hohe Formstabilität der Zwischen-Laminatschicht 28.

Bei der Herstellung der beiden Halbschalen 20a und 20b wird zunächst die äußere Laminatschicht 25 geformt wie das in den Fig. 12 zu sehen ist.

Für die Fertigung der äußeren Laminatschicht 25 werden dabei Trägermaterialien, bspw. Glas- und/oder Mineralfasermatten mit Bindemitteln, insbesondere aushärtbaren Kunststoffen getränkt und mit der nötigen Schichtdicke in eine Form 29 gebracht, die als vertiefte bzw. negative Form ausgelegt ist und dabei Konturen hat, die den Außenkonturen der Laminatschicht 25 entsprechen, wie das die Fig. 12 erkennen läßt.

Nachdem die Laminatschicht 25 in bzw. auf die Konturen der Form 29 aufgebracht ist, bildet sie eine glatte Außenfläche. Über ihre rauhere Innenfläche wird sodann die äußere Laminatschicht 25, bspw. durch Verkleben, mit den bereits entsprechend zugeschnittenen Versteifungsschichten und/oder den Laminat-Zwischenschichten 27 und 28 fest verbunden. In entsprechender Weise, also bspw. ebenfalls durch Verkleben, wird auch die feste Verbindung der anschließend aufzubringenden inneren Laminatschicht 26 mit der Zwischen-Laminatschicht 28 und-/oder der Versteifungsschicht 27 hergestellt.

Bei der Herstellung der äußeren Laminatschicht 25 und der inneren Laminatschicht 26 sowie der Versteifungsschicht 27 zur Bildung der Halbschalen 20a und 20b wird in den unteren Längsrandbereich jeder dieser Halbschalen 20a und 20b, und zwar wenigstens entlang dem geraden Längenbereich der Längswand 2a bzw. 2b ein Metallprofilträger 31a bzw. 31b eingebettet, wie dies in den Fig. 6 und 7 deutlich zu sehen ist. Dabei wird dieser Metallprofilträger 31a bzw. 31b wenigstens teilweise einerseits von der äußeren Laminatschicht 25 und andererseits von der inneren Laminatschicht 26 abgedeckt, wie das ebenfalls den Fig. 6 und 7 deutlich entnommen werden kann.

Wenigstens die innere Laminatschicht 26 wird dabei durch Öffnungen bzw. Ausnehmungen, insbesondere durch Längsschlitze 32a oder 32b, im Metallprofilträger 31a bzw. 31b hindurch mit der benachbarten Zwischen-und/oder Versteifungsschicht 27 fest verbunden, nämlich mindestens verklebt. Um dies zu erreichen, wird vorzugsweise die Laminatschicht 26 in die Längsschlitze 32a bzw. 32b hineinverformt, wie das in den Fig. 6 und 7 durch die Vertiefungen 33a und 33b verdeutlicht wird.

Es erweist sich als besonders vorteilhaft, wenn auch die äußere Laminatschicht 25 in entsprechender Weise eine feste Verbindung mit dem Metallprofilträger 31a bzw. 31b eingeht, so daß diesem ein optimaler Halt in den unteren Längsrandbereichen der Halbschalen 20a und 20b gewährt wird.

Die bereits weiter oben erwähnten Seitenwandstützen 17a und 17b werden wenigstens an oder nahe der hinteren Querkanten der beiden Halbschalen 20a und 20b mit der äußeren Laminatschicht 25 über den größten Teil der Höhe der betreffenden Längswand 2a bzw. 2b hinweg fest verbunden, insbesondere verklebt, während mit deren innerer Laminatschicht 26, über den oberen Bereich der Längswand 2a bzw. 2b sowie die jeweilige Deckenwandhälfte 2d' und 2d" verlaufend, eine Schaumkernverstärkung 34, vorzugsweise durch Verklebung, in feste Verbindung gebracht werden kann, wie dies bspw. der Fig. 9 zu entnehmen ist. Dabei kann die Schaumkernverstärkung 34 wiederum von einer Laminatschicht 35 umschlossen sein, die in die Laminatschicht 26 übergeht.

Mit der inneren Laminatschicht 26 beider Halbschalen 20a und 20b kann aber auch noch mindestens eine entlang der jeweiligen Längswand 2a bzw. 2b verlaufende, horizontale Schaumkernverstärkung 36a bzw. 36b, fest verbunden, vornehmlich verklebt werden, wie das die Fig. 7 erkennen läßt. Auch hierbei ist zweckmäßigerweise die Schaumkernverstärkung 36a bzw. 37a von einer Laminatschicht 37a bzw. 37b eingeschlossen, welche in die innere Laminatschicht 26 der jeweiligen Halbschale 20a bzw. 20b übergeht.

Bei der Zusammenfügung und anschließenden Überlappungslaminierung der beiden Halbschalen 20a und 20b zum geschlossenen Kastenaufbau 2 wird mindestens im hinteren Endbereich des Kastenaufbaues 2 eine Querverbindung zwischen den beiden Metallprofilträgern 31a und 31b über eine (nicht gezeigte) provisorische Endtraverse hergestellt, die dort die wünschenswerte Abstandshalterung bewirkt und darüber hinaus die Handhabung des Kastenaufbaues 2 während der Durchführung der Fügearbeiten erleichtert. Die entlang der Längswand 2a bzw. 2b jeder Halbschale 20a bzw. 20b in deren unterem Längsrandbereich angeordneten Metallaprofilträger 31a und 31b haben jeweils einen aufrechten Profilflansch 38a bzw. 38b sowie ein sich daran einstückig anschließendes, mit seiner Längsöffnung nach einwärts gerichtetes Rinnenprofil 39a bzw. 39b.

Der aufrechte Profilflansch 38a bzw. 38b des Metallprofilträgers 31a bzw. 31 b ist dabei zwischen der inneren Laminatschicht 26 sowie der dieser benachbarten Zwischen-und/oder Versteifungsschicht 27 eingeschlossen und weist die in seiner Längsrichtung verteilt angeordneten Öffnungen bzw. Ausnehmungen, z.B. die Längsschlitze 32a bzw. 32b, auf, durch die hindurch die innere Laminatschicht 26 mit der benachbarten Zwischen-und/oder Versteifungsschicht 27 in unmittelbarer Verbindung steht.

Auch der Stegabschnitt 39a' bzw. 39b' am Rinnenprofil 39a bzw. 39b der Metallprofilträger 31a bzw. 31b kann mit über seine Länge verteilt angeordneten Durchbrüchen, z.B. Längsschlitzen, versehen sein, damit sich in diese zur Verbesserung der Haltbarkeit auch die ihn überlappende äußere Laminatschicht 25 bereichsweise hineingeformt werden kann.

Oberhalb der durch die provisorische Endtraverse zwischen den beiden Metallprofilträgern 31a und 31b hergestellten Querverbindung wird die die Ladeplattform bildende Bodenplatte 20 von hinten in die mit ihren Längsöffnungen einander zugewendeten Rinnenprofile 39a und 39b eingeschoben, wie das die Fig. 6 und 7 erkennen lassen. Daraufhin kann die Bodenplatte 20 in den Rinnenprofilen 39a und 39b der beiden Metallprofilträger 31a und 31b lösbar fixiert werden, und zwar mittels einer größeren Anzahl von Schrauben 40a bzw. 40b, welche jeweils Löcher in den beiden Flanschen 39a", 39'" bzw. 39b", 39b'" der Rinnenprofile 39a bzw. 39b durchdringen. Dabei wirken die Schrauben 40a und 40b jeweils mit Gewinde- bzw. Mutterstücken 41a bzw. 41b zusammen, die fest auf der Oberseite des oberen Flansches 39a" bzw. 39b" der Rinnenprofile 39a und 39b angeordnet, z.B. angeschweißt sind.

Dort wo sich auf der Oberseite des Flansches 39a" bzw. 39b" der Rinnenprofile 39a bzw. 39b die Gewinde- bzw. Mutternstücke 41a bzw. 41b befinden, ist die Zwischen-und/oder Versteifungsschicht 27 beider Halbschalen 20a und 20b jeweils mit randseitig offenen Ausschnitten 27a bzw. 27b versehen, um dort Freiraum für die Unterbringung der Gewinde- bzw. Mutternstücke 41a, 41b zu erhalten. Außerhalb der Einbaubereiche der Gewinde-bzw. Mutternstücke 41a, 41b ruht hingegen die untere Längskante der Zwischen- und/oder Versteifungsschicht 27 auf der Oberseite des oberen Flansches 39a" bzw. 39b" der Rinnenprofile 39a und 39b und ist mit dieser vorzugsweise fest verklebt.

Die Bodenplatte 20 wird zur Herstellung der lösbaren Verbindung mit den Metallprofilträgern 31a und 31b so in deren Rinnenprofile 39a, 39b in Längsrichtung eingeschoben, daß die Schrauben 40a und 40b durch randseitig in der Bodenplatte 20 vorgesehene Löcher 42a und 42b hindurchgesteckt werden können. Die Löcher 42a und 42b werden dabei vorzugsweise durch in die Bodenplatte 20 eingesetzte Büchsen 43a und 43b aus Metall oder Kunststoff gebildet.

Wie bereits weiter oben erwähnt wurde ist es wichtig, daß die Zwischen- und/oder Versteifungsschicht 27 im unteren Bereich der Längswände 2a und 2b der Halb schalen 20a und 20b eine Dicke aufweisen, die um ein Mehrfaches, z.B. um das Drei- bis Fünffache, größer ist als die Dicke der Zwischen-Laminatschicht 28 im oberen Bereich dieser Längswände 2a und 2b sowie der Stirnwand 2c und der Decke 2d.

Zusätzlich zu der Versteifung, die die beiden Längswände 2a und 2b in unmittelbarer Nähe der hinteren Rückwandklappe 10a an ihren Querkanten durch die außen auflaminierten Seitenwandstützen 17a und 17b erhalten, welche mit dem hinteren Querträger 16 verbunden sind, ist eine weitere Querversteifung innenseitig zwischen den beiden Seitenwänden 2a und 2 vorgesehen. Diese wird durch den Einbau eines sogenannten Boxengestänges 44 erreicht, welches auf gleicher Ebene mit der vorderen Hilfstraverse 9a montiert und in Fig. 7 gezeigt ist. Dieses Boxengestänge 44 hat ein Querrohr 44a, das mit seinen Enden in Höhe der Oberkante der Zwischen-und/oder Versteifungsschicht 27 innenseitig an den Längswänden 2a und 2b stützend angreift. Dieses Rohr 44a ist dabei auf einer Stütze 44b befestigt, die mit ihrem Fuß 44c entweder auf der Bodenplatte 20 oder aber unmittelbar auf der diese untergreifenden Hilfstraverse 9a ruht und damit, bspw. durch Schrauben, in Verbindung steht. Die Stütze 44b wird dabei vorzugsweise von zwei Rohren 44e gebildet, deren obere Enden gabelförmig auseinanderlaufen und gegeneinander durch eine Stegplatte 44f abgesteift sind.

Wie den Fig. 6 und 7 entnommen werden kann, werden die Metallprofilträger 31a und 31b der beiden Halbschalen 20a und 20b des Kastenaufbaues 2 durch die Fahrwerkstraverse 3c sowie die vordere Hilfstraverse 9a und in ähnlicher Weise auch durch die hintere Hilfstraverse 9b unterfangen und abgestützt. Wenigstens die in diesen Bereichen vorhandenen Verbindungsschrauben 40a und 40b durchdringen dabei zugleich auch Löcher in den Enden der Fahrwerkstraverse 3c sowie der Hilfstraversen 9a und 9b. Die Metallprofilträger 31a und 31b der beiden Halbschalen 20a und 20b werden daher mit der Fahrwerkstraverse 3c sowie den Hilfstraversen 9a und 9b zu einem formstabilen Rahmenkörper verbunden, welcher auch die Bodenplatte 20 sicher und stabil abstützt.

Die durch die Schrauben 40a und 40b gebildete lösbare Verbindung macht es möglich, im Bedarfsfalle die Bodenplatte 20 des geschlossenen Kastenaufbaues 2 auf einfache Art und Weise auszutauschen.

Während dabei die Bodenplatte 20 mit ihren Längsrändern in die Rinnenprofile 39a und 39b der Metallprofilträger 31a, 31b formschlüssig eingreift, wird ihre hintere Querkante durch den hinteren Querträger 16 gestützt und geschützt, welcher wiederum mit den Metallprofilträgern 31a und 31b sowie den beiden Seitenwandstützen 17a und 17b in lösbare Verbindung gebracht ist.

Die sogenannte Integral-Bauweise des geschlossenen Kastenaufbaues 2, welche sich aus der festen Verbindung der beiden Halbschalen 20a und 20b und deren lösbarer Verbindung mit der Bodenplatte 20 ergibt, macht es möglich, einen außen- und innenseitig sehr glattflächigen, aerodynamisch günstig gestalteten Kraftfahrzeuganhänger 1 für den Transport von Tieren, insbesondere von Pferden, zu schaffen. Dabei hat der geschlossene Kastenaufbau 2 eine relativ leichtgewichtige, aber trotzdem stabile Bauweise, bei der die lösbaren Verbindungsstellen eine gegen Witterungseinflüsse weitestgehend geschützte Einbaulage haben und eine gute Abdichtung zwischen der von der Bodenplatte 20 gebildeten Ladeplattform sowie den unteren Längskantenbereichen der beiden Halbschalen 20a und 20b ergeben.

## Ansprüche

1. Verfahren zur Herstellung eines geschlossenen Anhänger-Kastenaufbaues, insbesondere bei Kraftfahrzeug-Anhängern für den Tiertransport, **dadurch gekennzeichnet,**
daß zunächst aus Trägermaterialien und Bindemitteln zwei zu einer vertikalen Längsebene (4-4) wenigstens annähernd symmetrische Halbschalen (20a ; 20b) mit je einer Längswand (2a ; 2b) einer Stirn-wandhälfte (2c' ; 2c") und einer Deckenhälfte (2d' ; 2d") geformt und ausgehärtet werden,
daß dann die die beiden Halbschalen (20a und 20b) tragenden Formhälften (29) mit den Randkanten (29a) ihrer Stirnwand-Formabschnitte sowie mit den Randkanten (29a) ihrer Decken-Formabschnitte stumpf gegeneinandergefahren

sowie anschließend die Randkanten (21a und 21b) der Stirnwandhälften (2c' und 2c'') und die Randkanten (22a und 22b) ihrer Deckenhälften (2d' und 2d'') durch Überlappungslaminierung (23, 24) aus weiteren Trägermaterialien und Bindemitteln fest miteinander verbunden werden (Fig. 8).

2. Verfahren nach Anspruch I,
**dadurch gekennzeichnet,**
daß jede Halbschale (20a ; 20b) aus einer äußeren Laminatschicht (25), aus einer inneren Laminatschicht (26) sowie - zweckmäßig jeweils teilweise - aus mindestens einer von diesen eingeschlossenen und mit ihnen verbundenen Zwischen-Laminatschicht (28) und/oder Versteifungsschicht (27) zusammengefügt wird (Fig. 7, 12 und 13),
und daß dabei vorzugsweise zunächst die äußere Laminatschicht (25) gebildet, unmittelbar darauf die Zwischen-Laminatschicht (28) und/oder die Versteifungsschicht (27) aufgebracht und dann auf dieser wiederum unmittelbar die innere Laminatschicht (26) aufgebaut wird.

3. Verfahren nach einem der Ansprüche 1 und 2,
**dadurch gekennzeichnet,**
daß in den unteren Längsrandbereich jeder Halbschale (20a ; 20b) wenigstens entlang der Längswand (2a ; 2b) ein Metallprofilträger (31a ; 31b) eingebettet und dabei wenigstens teilweise einerseits von der äußeren Laminatschicht (25) und andererseits von der inneren Laminatschicht (26) abgedeckt wird (Fig. 6 und 7),
wobei vorzugsweise wenigstens die innere Laminatschicht (26) durch Öffnungen bzw. Ausnehmungen, bspw. Längsschlsitze (32a ; 32b), im Metallprofilträger (31a ; 31b) hindurch mit der benachbarten Zwischen-Laminatschicht (28) und/oder Versteifungsschicht (27) fest verbunden, insbesondere verklebt, wird (Fig. 6 und 7).

4. Verfahren nach einem der Ansprüche 1 bis 3,
**dadurch gekennzeichnet,**
daß wenigstens an oder nahe der hinteren Querkanten der beiden Halbschalen (20a und 20b) mit der äußeren Laminatschicht (25) über den größten Teil der Höhe der Längswand (2a und 2b) hinweg eine Seitenwandstütze (17a und 17b) fest verbunden, insbesondere verklebt, wird (Fig. 1, 2 und 4),
während mit deren innerer Laminatschicht (26) - über den oberen Bereich der Längswand (2a und 2b) sowie entlang der Decke (2d bzw. 2d', 2d'') verlaufend -eine Schaumkernverstärkung (34), vorzugsweise durch Verklebung, in feste Verbindung gebracht wird (Fig. 9) und dabei zweckmäßig mit der inneren Laminatschicht (26) beide Halbschalen (20a und 20b) mindestens eine entlang der Längswand (2a und 2b) verlaufende, horizontale Schaumkernverstärkung (36a und 36b) verbunden, vornehmlich verklebt, wird (Fig. 6 und 7).

5. Verfahren nach einem der Ansprüche 1 bis 4,
**dadurch gekennzeichnet,**
daß die Metallprofilträger (31a und 31b) der beiden Halbschalen (20a und 20b) durch eine Fahrwerkstraverse (3c), mindestens eine Hilfstraverse (9a, 9b) sowie einen hinteren Querträger (16) zu einem Rahmenkörper miteinander verbunden werden (Fig. 5) und dabei vorzugsweise eine Bodenplatte (20) mit ihren Längsrändern in die beiden Metallprofilträger (31a und 31b) formschlüssig eingeschoben und darin wenigstens durch den hinteren Querträger (16) lagenfixiert wird
und darüber hinaus zweckmäßigerweise die Bodenplatte (20) durch die Metallprofilträger (31a und 31b) mit der Fahrwerkstraverse (3c), der Hilfstraverse (9a, 9b), dem hinteren Querträger (16) sowie mit den Fahrwerks-Längsträgern (3a und 3b) lösbar verbunden wird (Fig. 5 bis 7).

6. Kraftfahrzeuganhänger, insbesondere für den Tiertransport, mit einem einachsigen oder tandemachsigen Fahrgestell, einer auf diesem montierten Bodenplatte als Ladeplattform und einem geschlossenen Kastenauf bau, der aus zwei Längswänden, einer Stirnwand und einer Decke besteht, und dessen Rückwand von mindestens einer auf eine horizontale Achse verlagerbaren Klappe gebildet ist,
**dadurch gekennzeichnet,**
daß der Kastenaufbau (2) aus zwei zu seiner vertikalen Längsebene (4-4) wenigstens annähernd symmetrischen Halbschalen (20a und 20b) besteht, deren jeder einstückig eine Längswand (2a bzw. 2b), eine Stirnwandhälfte (2c' bzw. 2c'') und eine Deckenhälfte (2d' bzw. 2d'') umfaßt,
daß diese Halbschalen (20a und 20b) mit den Randkanten (21a und 21b) ihrer Stirnwandhälften (2c' und 2c'') sowie mit den Randkanten (22a und 22b) ihrer Deckenhälften (2d' und 2d'') auf Abstand (20c) gegeneinandergesetzt sind,
und daß die einander zugewendeten Randkantenbereiche (21a, 22a bzw. 21b, 22b) - stufenartig - durch Überlappungs-Zwischenstücke (23, 24, 30) fest miteinander verbunden sind (Fig. 8).

7. Kraftfahrzeuganhänger nach Anspruch 6,
**dadurch gekennzeichnet,**
daß die Halbschalen (20a und 20b) jeweils als Laminat-Formteile aus Trägermaterialien und Bindemitteln ausgeführt sowie durch ebenfalls laminierte Überlappungsstücke (23, 24, 30) aus solchen Trägermaterialien und Bindemitteln miteinander verbunden sind.

8. Kraftfahrzeuganhänger nach einem der Ansprüche 6 und 7,
**dadurch gekennzeichnet,**
daß die Trägermaterialien aus Gewebe- und/oder Vliesmatten, z.B. Glas- oder Mineralfasermatten, und formsteifen Schichtkörpern, bspw. Holzplatten, Furnierstreifen, Kunststoffplatten oder dergleichen, bestehen, während die Bindemittel von härtbaren Kunststoffen und/oder Klebern gebildet sind.

9. Kraftfahrzeuganhänger nach einem der Ansprüche 6 bis 8, **dadurch gekennzeichnet,** daß jede Halbschale (20a und 20b) aus einer äußeren Laminatschicht (25) und einer inneren Laminatschicht (26) sowie durch diese miteinander verbindende formhaltende Zwischen-Laminatschichten (28) und-/oder Versteifungsschichten (27), vorzugsweise Holzplatten, Furnierschichten, Schichtkörpertafeln oder dergleichen, gebildet ist (Fig. 6 und 7).

10. Kraftfahrzeuganhänger nach einem der Ansprüche 6 bis 9, **dadurch gekennzeichnet,** daß zwischen die unteren Längsrandbereiche der äußeren Laminatschicht (25) und der inneren Laminatschicht (26) mindestens entlang der Längswand (2a bzw. 2b) ein Metallprofilträger (31a bzw. 31b) eingesetzt ist, der einen aufrechten Profilflansch (38a bzw. 38b) und ein sich daran einstückig anschließendes, mit seiner Längsöffnung nach einwärts gerichtetes Rinnenprofil (39a bzw. 39b) umfaßt (Fig. 6 und 7), daß dabei vorzugsweise der aufrechte Profilflansch (38a bzw. 38b) des Metallprofilträgers (31a bzw. 31b) zwischen der inneren Laminatschicht (26) sowie der dieser benachbarten Zwischen-Laminatschicht (28) und/oder Versteifungsschicht (27) eingeschlossen ist und in seiner Längsrichtung verteilt angeordnete Durchbrüche, z.B. Längsschlitze (32a bzw. 32b), aufweist, durch die hindurch die innere Laminatschicht (26) mit der benachbarten Zwischen-Laminat schicht (28) und/oder Versteifungsschicht (17) in unmittelbarer Verbindung (33a bzw. 33b) steht, bspw. verklebt ist (Fig. 6 und 7), und daß ebenfalls vorzugsweise der Stegabschnitt (39a' bzw. 39b'') am Rinnenprofil (39a bzw. 39b) des Metallprofilträgers (31a bzw. 31b) von der äußeren Laminatschicht (25) überlappt ist und dabei über seine Länge verteilt angeordnete Durchbrüche, z.B. Längsschlitze, aufweist, in die die äußere Laminatschicht (25) bereichsweise zur Herstellung einer Halteverbindung hineingeformt ist.

11. Kraftfahrzeuganhänger nach einem der Ansprüche 6 bis 10, **dadurch gekennzeichnet,** daß die die Ladeplattform bildende Bodenplatte (20) mit ihren Längsrändern in die Rinnenprofile (39a und 39b) der beiden mit ihren Längsöffnungen einander zugewendeten Metallprofilträgern (31a und 31b) eingeschoben und darin mittels deren Flansche (39a'', 39b''' bzw. 39b'', 39b''') durchdringenden Schrauben (40a und 40b) lösbar fixiert ist, wobei zweckmäßig die Eingriffsgewinde für die Schrauben (40a und 40b) aus Gewinde- bzw. Mutterstücken (41a und 41b) bestehen, die fest auf der Oberseite des oberen Flansches (39a'' bzw. 39b'') der Rinnenprofile (39a bzw. 39b) angeordnete, z.B. angeschweißt, und in randseitigen Ausschnittbereichen (27a und 27b) der Zwischen-Laminatschicht (28) und/oder Versteifungsschicht (27) aufgenommen sind, und vorzugsweise die Schrauben (40a und 40b) durch randseitig in der Bodenplatte (20) vorgesehene, vorzugsweise ausgebuchste (43a, 43b) Löcher (42a und 42b) geführt sind (Fig. 6 und 7) sowie vorteilhaft die Bodenplatte (20) durch die Metallprofilträger (31a und 31b) mit der Fahrwerkstraverse (3c), der Hilfstraverse (9a, 9b), dem hinteren Querträger (16) sowie mit den Fahrwerks Längsträgern (3a und 3b) lösbar verbunden ist.

12. Kraftfahrzeuganhänger nach einem der Ansprüche 6 bis 11, **dadurch gekennzeichnet,** daß der die große Dicke (27) aufweisende - untere - Höhenbereich der beiden Längswände (2a und 2b) wenigstens nahe der hinteren Querkanten durch außen auflaminierte Seitenwandstützen (17a und 17b) stabilisiert ist, während der obere Bereich dieser Längswände (2a und 2b) sowie die Decke (2d) mit einer innenseitig auflaminierten Schaumkernverstärkung (34, 35) versehen ist (Fig. 1, 4, 5 und 9), und daß zweckmäßig darüber hinaus mit der inneren Laminatschicht (26) beide Halbschalen (20a und 20b) mindestens eine der entlang der Längswand (2a und 2b) verlaufende horizontale Schaumkernverstärkung (36a, 36b ; 37a, 37b) fest verbunden, vornehmlich verklebt ist (Fig. 6 und 7).

13. Kraftfahrzeuganhänger nach einem der Ansprüche 6 bis 12, **dadurch gekennzeichnet,** daß die metallprofilträger (31a und 31b) der beiden Halbschalen (20a und 20b) durch eine Fahrwerkstraverse (3c), mindestens eine Hilfstraverse (9a, 9b) sowie einen hinteren Querträger (16) zu einem Rahmenkörper miteinander verbunden sind (Fig. 5 bis 7), wobei zweckmäßig das hintere Ende der Bodenplatte (20) durch einen die hinteren Enden der beiden Metallprofilträger (31a und 31b) verbindenden Querträger (16) geschützt und abgestützt ist, und vorteilhafterweise noch die Bodenplatte (20) mit ihren Längsrändern in die beiden Metallprofilträger (31a und 31b) formschlüssig eingeschoben und darin wenigstens durch den hinteren Querträger (16) lagenfixiert ist.

## Claims

1. Method of producing a closed trailer box construction, more especially motor vehicle trailers for transporting animals, wherein, initially, from support materials and bonding agents, two half shells (20a ; 20b) at least approximately symmetrical with a vertical longitudinal plane (4-4), each with a longitudinal wall (2a ; 2b), an end wall half (2c', 2c'') and a roof half (2d'. 2d''), are formed and hardened, that then the mould halves (29) supporting the two half shells (20a and 20b) are moved flush one against the other with the marginal edges (29a) of their end wall mould sections and also with the marginal edges (29a) of their roof mould sections, and also thereafter the marginal edges (21a and 21b) of the end wall halves (2c' and 2c") and the marginal edges (22a and 22b) of their roof halves (2d' and 2d") are rigidly or firmly connected to one another by overlapping lamination (23, 24) of further support materials and bonding agents (Fig. 8).

2. Method according to claim 1, wherein each half shell (20a, 20b) is assembled from an outer laminate layer (25), from an inner laminate layer (26) and also - preferably in part - from at least one intermediate laminate layer (28) and/or reinforcing layer (27) (Figs. 7, 12 and 13), which is enclosed by these latter and connected to them, and that in this case, advantageously initially, the outer laminate layer (25) is formed, thereafter the intermediate laminate layer (28) and/or the reinforcing layer (27) is applied directly thereto and then the inner laminate layer is in turn directly formed thereon.

3. Method according to one of the claims 1 and 2, wherein a metal section or profile support (31a, 31b) is embedded in the region of the lower longitudinal edge region of each half shell (20a, 20b), at least along the longitudinal wall (2a ; 2b), and is at least partially covered, on the one side, by the outer laminate layer (25) and, on the other side, by the inner laminate layer (26) (Figs. 6 and 7), advantageously at least the inner laminate layer (26) being firmly connected, more especially by adhesive, through openings or recesses, e.g. longitudinal slots (32a, 32b), in the metal section member carrier (31a ; 31b) with the adjoining intermediate laminate layer (28) and/or reinforcing layer (27) (Figs. 6 and 7).

4. Method according to one of the claims 1 to 3, wherein at least at or near the rearward transverse edges of the two half shells (20a and 20b) a side wall support (17a and 17b) is connected fast, more especially by adhesive, to the outer laminate layer (25) over the major part of the height of the longitudinal wall (2a and 2b (Figs. 1, 2 and 4), while a foam core reinforcement (34) is firmly united, advantageously by adhesive, with the inner laminate layer (26) thereof - over the upper region of the longitudinal wall (2a and 2b) and also along the roof 2d or 2d', 2d") (Fig. 9), at least one horizontal foam core reinforcement (36a and 36b) being connected, mainly stuck, with the inner laminate layer (26) of both half shells (Figs. 6 and 7).

5. Method according to one of the claims 1 to 4, wherein the metal profile supports (31a and 31b) of the two half shells (20a and 20b) are connected to one another by a chassis cross member (3c), at least one auxiliary cross member (9a, 9b) and also a rear transverse support (16) to form a frame member (Fig. 5) and advantageously a base plate (20) is pushed in form-locking manner with its longitudinal margins into the two metal profile supports (31a and 31b) and is fixed in position therein, at least by the rear transverse support (16) and, in addition, preferably the base plate (20) is releasably connected by the metal profile supports (31a and 31b) to the chassis cross-member (3c), the auxiliary cross-member (9a, 9b), the rear transverse beam (16) and also to the longitudinal beams of the chassis (3a and 3b) (Figs. 5 to 7).

6. Motor vehicle trailer, more especially for transporting animals, with a single axle or tandem axle chassis, a base plate as load platform mounted on the chassis and a closed box structure, which consists of two longitudinal walls, an end wall and a roof, and of which the rear wall is formed of at least one flap displaceable on a horizontal shaft, wherein the box structure (2) consists of two half shells (20a and 20b) at least approximately symmetrical to its vertical longitudinal plane (4-4) and each of which comprises, in one piece, a longitudinal wall (2a or 2b), an end wall half (2c' or 2c") and a roof half (2d' or 2d"), that these half shells (20a and 20b) are positioned opposite one another at a distance (20c) with the marginal edges (21a and 21b) of their end wall halves (2c' and 2c") and with the marginal edges of their roof halves (2d' and 2d"), and that the marginal edges (21a, 22a and 21b, 22b, respectively) are connected fast to one another - stepwise - by overlapping intermediate elements (23, 24, 30) (Fig. 8).

7. Motor vehicle trailer according to claim 6, wherein the half shells (20a and 20b) are each made as laminate moulded parts of support materials and bonding agents and are connected to one another by likewise laminated overlapping pieces (23, 24, 30) of such support materials and bonding agents.

8. Motor vehicle trailer according to one of the claims 6 and 7, wherein the support materials are formed of fabric and/or fleece mats, e.g. glass fibre and mineral fibre mats, and rigid layer members, for example, wooden boards, veneer strips, synthetic plastic plates or the like, while the bonding agents are formed of curable synthetic plastics and/or adhesives.

9. Motor vehicle trailer according to one of the claims 6 to 8, wherein each half shell is formed of an outer laminate layer (25) and an inner laminate layer (26) and also by shape maintaining intermediate laminate layers (28) and/or stiffening layers (27), advantageously wooden boards, veneer layers, laminated plates or the like (Figs. 6 and 7).

10. Motor vehicle trailer according to one of the claims 6 to 9, wherein a metal section-member support (31a or 31b) is fitted between the lower longitudinal edge regions of the outer laminate layer (25) and the inner laminate layer (25), at least along the longitudinal wall (2a or 2b), which support comprises an upright profile flange (38a or 38b) and a channel section member (39a or 39b) adjoining it in one piece and directed with its longitudinal opening inwards (Figs. 6 and 7), wherein advantageously the upright profile flange (38a or 38b) of the metal profile support (31a or 31b) is enclosed between the inner laminate layer (26) and the intermediate laminate layer (28) and/or reinforcing layer (27) which is adjacent thereto and comprises openings e.g. longitudinal slots (32a or 32b), arranged distributed in its longitudinal direction, through which slots the inner laminate layer (26) is directly connected, for example, stuck, to the adjoining intermediate and/or stiffening layer (17) at (33a or 33b), (Figs. 6 and 7), and that also advantageously the web section (39a' or 39b") of the channel profile (39a or 39b) of the metal profile support (31a or 31b) is overlapped by the outer laminate layer (25) and has openings, e.g. longitudinal slots, distributed over its length, into which the outer laminate layer (25) is formed in regions so as to produce a holding union.

11. Motor vehicle trailer according to one of the claims 6 to 10, characterised in that the bottom plate (20) forming the load platform is pushed with its longitudinal margins into the channel secions (39a and 39b) of the two metal section members (31a and 31b) which face one another with their longitudinal openings and is releasably fixed therein by means of screws (40a and 40b) passing through the respective flanges (39a", 39a"'and 39b", 39"') thereof, the engaging threads for the screws (40a and 40b) expediently consisting of threaded members or nut members (41a and 41b), which are fixedly arranged, for example, welded, on the upper side of the upper flange (39a" or 39b") of the channel sections (39a or 39b), and are engaged in marginal cut-out regions (27a and 27b) of the intermediate laminate layer (28) and/or stiffening layer (27) and advantageously the screws (40a and 40b) are guided through advantageously holes (42a and 42b) which are bushed at (43a, 43b) and are provided marginally in the base plate (20) (Figs. 6 and 7), and advantageously the base plate (20) is releasably connected by the metal section supports (31a and 31b) with the chassis cross-member (3c), the auxiliary cross-member (9a, 9b), the rear transverse support (16) and also with the chassis longitudinal supports (3a and 3b).

12. Motor vehicle trailer according to one of the claims 6 to 11, characterised in that the lower-height region of the two longitudinal walls (2a and 2b) having considerable thickness (27) is stabilised, at least near the rear transverse edges, by side wall supports (17a and 17b) laminated externally thereon, while the upper region of these longitudinal walls (2a and 2b), as well as the roof (2d), is provided with a foam core reinforcement (34. 35) laminated on the inside (Figs. 1, 4, 5 and 9) and expediently and additionally, at least one horizontal foam core reinforcement (36a, 36b ; 37a, 37b) extending along the longitudinal wall (2a and 2b) is connected fast, preferably by adhesive, to the inner laminate layer (26) of both half shells (20a and 20b) (Figs. 6 and 7).

13. Motor vehicle trailer according to one of the claims 6 to 12, characterised in that the metal profile supports (31a and 31b) of the two half shells (20a and 20b) are connected to one another by a chassis cross member (3c), at least one auxiliary cross-member (9a, 9b) and a rear cross-member (16) to form a frame member (Figs. 5 to 7), preferably the rear end of the base plate (20) being protected and supported by a transverse beam (16) connecting the rear ends of the two metal supports (31a and 31b) and, more advantageously, also the bottom plate (20) is pushed in form-locking manner with its longitudinal edges into the two metal section supports (31a and 31b) and are fixed in position therein, at least by the rear transverse support (16).

## Revendications

1. Procédé pour la fabrication d'un fourgon fermé, notamment de remorques destinées au transport d'animaux, caractérisé en ce qu'on forme à partir de matériaux de support et de moyens de liaison et durcit d'abord deux demi coquilles (20a,20b) au moins approximativement symétriques par rapport à un plan longitudinal vertical (4-4), les demi coquilles comportant chacune une paroi longitudinale (2a,2b), une demi paroi frontale (2e',2e") et un demi toit (2d',2d"), en ce qu'on amène l'un contre l'autre les demi moules (29) portant les deux demi coquilles (20a, 20b), les arêtes latérales (29a) des parties de paroi frontale ainsi que les arêtes latérales (29a) des parties du toit venant bout à bout l'une contre l'autre, et en ce qu'on relie ensuite solidement entre elles les arêtes latérales (21a et 21b) des demi parois frontales (2C' et 2c") et les arêtes latérales (22a et 22b) des demi toits (2d' et 2d") par recouvrement stratifié (23,24) constitué par des materiaux de support et des agents de liaison (figure 8).

2. Procédé selon la revendication 1 caractérisé en ce que chaque demi coquille (20a, 20b) est constituée par une couche de stratifié extérieure (25), par une couche de stratifié intérieure (26) ainsi que, avantageusement chaque fois partiellement, par au moins une couche de stratifié intermédiaire (28) et/ou une couche de renforcement (27), enfermée par celles-ci et y reliées (figure 7, 12 et 13), et en ce qu'on forme de préférence d'abord la couche de stratifié extérieure (25) en ce qu'on applique immédiatement sur celle-ci la couche de statifié intermédiaire (28) et/ou la couche de renforcement (27) et ensuite, sur celle-ci, de nouveau immédiatement la couche de stratifié intérieure (26).

3. Procédé selon l'une des revendications 1 et 2 caractérisé en ce qu'un profil métallique est logé au moins le long de la paroi longitudinale (2a, 2B) dans la zone du bord longitudinal inférieur de chaque demi coquille (20a, 20b), et est recouvert au moins partiellement, d'une part, par la couche de stratifié extérieure (25) et, d'autre part, par la couche de stratifié intérieure (26) (figures 6 et 7), au moins la couche de stratifié intérieure (26) étant, de préférence, solidement reliée, notamment collée, à la couche de stratifié intermédiaire (28) et/ou de renforcement (27) adjacente à travers des ouvertures ou des évidements, par exemple des fentes longitudinales (32a, 32b),pratiques dans le profilé métallique (figure 6 et 7).

4. Procédé selon l'une des revendications 1 à 3 caractérisé en ce qu'au moins sur les ou à proximité des arêtes transversales arrières des deux demi coquilles (20a et 20b), un renfort de paroi latérale (17a et 17b) est solidement relié, notamment collé, sur la couche de stratifié extérieure (25) sur la majeure partie de la hauteur de la paroi longitudinale (1a et 2b)(figure 1, 2 et 4), tandis qu'un renforcement à noyau moussé (34) est mis en liaison rigide, de préférence collé, avec la couche de stratifié intérieure de celles-ci (26) en s'étendant au-dessus de la zone supérieure de la paroi longitudinale (2a et 2b) ainsi que le long du toit (2d ou 2d', 2d"), et en ce qu'au moins un renforcement horizontal à noyau moussé (36a et 36b) s'étendant le long de la paroi longitudinale (2a et 2b) est relié, notamment collé, avantageusement sur la couche de statifié intérieure (26) des deux demi coquilles (20a et 20b)(figure 6 et 7).

5. Procédé selon l'une des revendications 1 à 4 caractérisé en ce que les profilés métalliques (31a et 31b) des deux demi coquilles (20a et 20b) sont reliés en un cadre par une traverse de châssis (3C), au moins une traverse auxiliaire (9a, 9b) ainsi qu'une traverse arrière (16) (figure 5) et en ce qu'une plaque de fond (20) est de préférence introduite par adaptation des formes, par ses bords longitudinaux,dans les deux profilés métalliques (31a et 31b) et y est positionnée au moins par la traverse arrière (16) et en ce que, de plus, la plaque de fond (20) est avantageusement reliée de manière amovible à la traverse de châssis(3c), la traverse auxiliaire (9a, 9b), la traverse arrière (16) ainsi que les longerons de châssis (3a et 3b) grâce aux profiles métalliques (31a et 31b)(figure 5 à 7).

6. Remorque de véhicule automobile, notamment destinée au transport d'animaux, comportant un châssis à un axe ou à deux axes, une plaque de fond montée sur celui-ci servant de plateforme de chargement et un fourgon ferme qui se compose de deux parois longitudinales, d'une paroi frontale et d'un toit et dont la paroi arrière est constituée par au moins une plaque basculable sur un axe horizontal caractérisé en ce que le fourgon (2) est constitué par deux demi coquilles (20a et 20b) au moins approximativement symétriques par rapport à son plan longitudinal vertical (4-4), chaque demi coquille comportant, en une seule pièce, une paroi longitudinale (2a ou 2b), une demi paroi frontale (2c' ou 2c") et un demi toit (2d' ou 2d"), en ce que ces demi coquilles (20a et 20b) sont disposées avec les arêtes latérales (21a et 21b) de leur demi paroi frontale (2C' et 2c") ainsi que les arêtes latérales (22a et 22b) de leur demi toit (2d' et 2d") a distance (20c) l'une contre l'autre, et en ce que les zones d'arête latérale orientées l'une vers l'autre (21a, 22a ou 21b, 22b) sont rigidement reliées entre elles, de façon étagée, par des éléments de recouvrement (23, 24, 30)(figure 8).

7. Remorque de véhicule automobile selon la revendication 6 caractérisée en ce que les demi coquilles (20a et 20b) consistent chacune, en des éléments stratifiés formés, constitués par des matériaux de support et des moyens de liaison et sont reliées également par des éléments de recouvrement stratifiés (23, 24, 30) constitués par de tels matériaux de support et moyens de liaison.

8. Remorque de véhicule automobile selon l'une des revendications 6 et 7 caractérisée en ce que les matériaux de support consistent en des mats tissés et/ou non tissés, par exemple des mats de fibres de verre ou de fibres minérales, et en des couches de forme rigide, par exemple des panneaux de bois, des bandes contreplaquées, des panneaux en matériau synthétique ou analogue, tandis que les moyens de liaison sont constitués par des matériaux synthétiques durcissables et/ou des adhésifs.

9. Remorque de véhicule automobile selon l'une des revendications 6 à 8 caractérisée en ce que chaque demi coquille (20a et 20b) est constituée par une couche de stratifié extérieure (25) et une couche de stratifié intérieure (26) ainsi que par des couches de stratifié intermédiaires (28) et/ou des couches de renforcement (27) maintenant leur forme et reliant celles-ci, de préférence des panneaux en bois, des couches contreplaquées, des panneaux stratifiés ou analogues (figures 6 et 7).

10. Remorque de véhicule automobile selon l'une des revendications 6 à 9 caractérisée en ce qu'un profilé métallique (31a ou 31b) est logé entre les zones latérales longitudinales inférieures de la couche de stratifié extérieure (25) et intérieure (26) au moins le long de la paroi longitudinale (2a ou 2b), le profilé métallique comportant une bride de profilé verticale (38a ou 38b) et un profilé en gouttière (39a ou 39b) s'y raccordant en une seule pièce, dont l'ouverture longitudinale est orientée vers l'intérieur (figures 6 et 7) en ce que, de préférence, la bride de profilé verticale (38a ou 38b) du profilé métallique (31a ou 31b) est enfermée entre la couche de stratifié intérieure (26) et la couche de stratifié intermédiaire (28) adjacente et/ou la couche de renforcement (27) et présente des perçages répartis dans la direction longitudinale, par exemple des fentes longitudinales (32a ou 32b), à travers lesquels la couche de stratifié intérieure (26) est en liaison directe (33a ou 33b), par exemple, par collage avec la couche de stratifié intermédiaire adjacente (28) et/ou la couche de renforcement (17)(figures 6 et 7), et en ce que, de préférence, l'âme (39a' ou 39b') du profilé en gouttière (39a ou 39b) du profilé métallique (31a ou 31b) est aussi recouverte par la couche de stratifié extérieure (25) et présente des perçages répartis sur sa longueur, par exemple des fentes longitudinales, dans lesquels la couche de stratifié extérieure (25) est pressée par endroit en vue d'une liaison de retenue.

11. Remorque de véhicule automobile selon l'une des revendications 6 à 10 caractérisée en ce que la plaque de fond (20) constituant la plateforme de chargement est introduite par ses bords longitudinaux dans les profilés en gouttière (39a et 39b) des deux profilés métalliques (31a et 31b) dont les ouvertures longitudinales sont orientées l'une vers l'autre et est fixée de façon désolidarisable dans ceux-ci à l'aide de vis (40a et 40b) traversant leurs brides (39a″,39‴ ou 39b′, 39‴), les filets d'interaction des vis (40a et 40b) étant avantageusement constitués par des pièces taraudées ou des écrous (41a et 41b) qui sont rigidement agencés, par exemple soudés, sur la face supérieure de la bride supérieure (39a″ ou 39b″) des profilés en gouttière (39a ou 39b) et qui sont logés dans des zones évidées (27a et 27b) latérales de la couche de stratifié intermédiaire (28), les vis (40a et 40b) étant de préférence menées à travers des perçages (42a et 42b) de préférence équipés d'une cheville (43a, 43b), pratiqués du côté du bord dans la plaque de fond (20)(Figures 6 et 7), la plaque de fond (20) étant reliée de façon désolidarisable, grâce au profilé métallique (31a et 31b), à la traverse de châssis (3c), la traverse auxiliaire (9a,9b), la traverse arrière (16) ainsi que les longerons de châssis (3a et 3b).

12. Remorque de véhicule automobile selon l'une des revendications 6 à 11, caractérisée en ce que la zone de grande épaisseur, zone inférieure, des deux parois longitudinales (2a et 2b) est stratifiée, au moins à proximité des arêtes transversales arrières,par des renforts de parois latérale (17a et 17b) collés sur la face extérieure des parois longitudinales, tandis que la zone supérieure de ces parois longitudinales (2a et 2b) ainsi que le toit (2D) sont munis d'un renforcement à noyau moussé (34, 35) collé à l'intérieur (figures 1,4,5 et 9), et en ce que, en outre, au moins un renforcement horizontal à noyau moussé (36a, 36b, 37a, 37b) s'étendant le long de la paroi longitudinale (2a et 2b) est solidement relié, de préférence, collé (figure 6 et 7), à la couche de stratifié intérieure (26) des deux demi coquilles (20a et 20b).

13. Remorque de véhicule automobile selon l'une des revendications 6 à 12 caractérisé en ce que les profilés métalliques (31a et 31b) des deux demi coquilles (20 a et 20b) sont reliés en un cadre (figures 5 à 7) par une traverse de châssis (3c), au moins une traverse auxiliaire (9a, 9b), ainsi qu'une traverse arrière (16), l'extrémité arrière de la plaque de fond (20′) étant avantageusement protégée et appuyée par une traverse (16) reliant les extrémités arrières des deux profilés métalliques (31a et 31b), la plaque de fond (20) étant encore avantageusement introduite par adaptation des formes de ses bords longitudinaux dans les deux profilés métalliques (31a et 31b) et positionnée dans ceux-ci au moins par la traverse arrière (16).

Fig.1

Fig.5

Fig.2

Fig.3

Fig.4

Fig. 8

Fig. 9

Fig. 6

Fig. 7

Fig.10

Fig.11

29a

Fig.12

25

29